# EUROPÄISCHE PATENTSCHRIFT

(11) **EP 1 041 250 B1**
(45) Veröffentlichungstag und Bekanntmachung des Hinweises auf die Patenterteilung: **26.10.2005**
(21) Anmeldenummer: 00810264.2
(22) Anmeldetag: 29.03.2000
(51) Int. Cl.: F01D 25/24, F01D 25/12, F01D 11/08

(54) **Hitzeschild für eine Gasturbine**
Heat shield for a gas turbine
Bouclier themique pour turbine à gaz

(30) Priorität: 01.04.1999 DE 19915049
(43) Veröffentlichungstag der Anmeldung: 04.10.2000
(73) Patentinhaber: Alstom Technology Ltd, 5400 Baden (CH)
(72) Erfinder: Eng, Kynan, 5400 Baden (CH); Pfeiffer, Christof, 79790 Küssaberg (DE); Wellenkamp, Ulrich, 5210 Windisch (CH)

(56) Entgegenhaltungen:
- EP-A- 0 555 082
- DE-C- 518 106
- GB-A- 229 627
- US-A- 3 860 358
- US-A- 5 641 267

## Beschreibung

### TECHNISCHES GEBIET

Die vorliegende Erfindung bezieht sich auf das Gebiet der Technik der Gasturbinen. Sie betrifft ein Hitzeschild für eine Gasturbine, welches Hitzeschild insbesondere die rotierenden Schaufeln einer Stufe der Gasturbine ringförmig umschliesst und aus einer Mehrzahl von in Umfangsrichtung hintereinander angeordneten, kreissegmentförmig gekrümmten und von aussen gekühlten Hitzeschildsegmenten besteht, deren Längsseiten als in Umfangsrichtung verlaufende, entsprechend gekrümmte Schienen mit jeweils einem in axialer Richtung abstehenden ersten Arm ausgebildet sind, und die zur Befestigung am Gehäuse der Gasturbine mit den ersten Armen jeweils in einem ringförmigen Zwischenraum konstanter Breite gelagert sind.

Ein solches segmentiertes Hitzeschild ist z.B aus der Druckschrift US-A-5,071,313 bekannt.

### STAND DER TECHNIK

Ein Hitzeschild in einer Gasturbine hat im allgemeinen die Funktion, den Strömungsraum für das Heissgas zu begrenzen und die Gehäuse und Tragstrukturen der Gasturbine vor dem Heissgas und einem übermässigen Wärmeeintrag zu schützen. Hierzu ist es erforderlich, das Hitzeschild zu kühlen, wie dies beispielsweise in der US-A-3,864,056 beschrieben ist. Die Kühlung, die üblicherweise durch das Anströmen des Hitzeschildes mit Kühlluft auf der dem Heissgas abgewandten Seite erreicht wird, verursacht Temperaturdifferenzen im Hitzeschild und damit innere Wärmespannungen, die das Hitzeschild übermässig beanspruchen können.

Aufgrund der Kühlung ergibt sich zwischen der dem Heissgas zugewandten Vorderseite und der mit Kühlluft beaufschlagten Rückseite des Hitzeschildes ein Temperaturgradient. Dadurch haben die einzelnen, wegen der Rotationssymmetrie der Gasturbine kreissegmentförmig gekrümmten Segmente des Hitzeschildes das Bestreben, sich zu strecken bzw. zu "entkrümmen". Um die Wirkung der dadurch entstehenden inneren Spannungen zu begrenzen, hat man in der eingangs genannten Druckschrift US-A-5,071,313 beispielsweise vorgeschlagen, in den seitlich angeordneten Befestigungsschienen der Segmente T-förmige Schlitze einzubringen.

Ein anderes Problem ergibt sich aus der thermisch bedingten Entkrümmung bzw. Verbiegung der Segmente im Zusammenhang mit deren Lagerung bzw. Befestigung am Gehäuse der Gasturbine. Werden das Hitzeschild bzw. seine Segmente durch die Art der Lagerung an der Entkrümmung gehindert, bauen sich innere Spannungen auf, die über die Festigkeitsgrenzen des verwendeten Werkstoffes hinausgehen und Risse verursachen können. Die Erfahrungen mit Hitzeschilden in verschiedenen Gasturbinen haben gezeigt, dass die Ursache von Rissen häufig innere Spannungen gewesen sind, die durch Temperaturdifferenzen verursacht wurden. Um einen derartigen Spannungsaufbau zu vermeiden, ist in der EP-B1-0 728 258 vorgeschlagen worden, die Segmente des Hitzeschildes mittels angeformter Haken am Gehäuse zu lagern, wobei erste Haken in der Mitte des Segments mit wenig Spiel eingehängt sind, während zweite Haken an den Enden des Segments mit soviel Spiel eingehängt sind, dass bei der thermisch bedingten Streckung der Segmente und der damit verbundenen Verschiebung der zweiten Haken keine mechanischen Spannungen durch die Aufhängung erzeugt werden.

Die bekannte spielbehaftete Lagerung mittels der ersten und zweiten Haken hat jedoch verschiedene Nachteile: Weil die zentrale Fixierung der Segmente durch die ersten Haken nicht ausreicht, um die Segmente insgesamt in ihrer Position zu fixieren, muss zusätzlich ein Band (62 in Fig. 2 der EP-B1-0 728 258) eingelegt werden, um die Segmente in einer stabilen Lage zu halten. Dies erfordert bei Herstellung und Montage des Hitzeschildes einen erheblichen zusätzlichen Aufwand.

Siehe hierzu auch das Dokument US-3 860 358.

### DARSTELLUNG DER ERFINDUNG

Es ist daher Aufgabe der Erfindung, einen (segmentierten) Hitzeschild für eine Gasturbine zu schaffen, der die angeführten Nachteile vermeidet und insbesondere bei einfachem Aufbau und leichter Montierbarkeit der Segmente eine stabile Befestigung der Segmente ermöglicht, ohne die thermisch bedingte Entkrümmung der Segmente wesentlich zu behindern.

Die Aufgabe wird durch die Gesamtheit der Merkmale des Anspruchs 1 gelöst. Der Kern der Erfindung besteht darin, die einzelnen Segmente des Hitzeschildes über an den Längsseiten durchgehende Schienen an ihren jeweiligen Enden praktisch spielfrei zu lagern, während im Mittelbereich ausreichend Spiel vorgesehen ist, damit sich beim thermisch bedingten Entkrümmen der Segmente der mittlere Bereich ohne Behinderungen in radialer Richtung verschieben kann. Die Auflagepunkte der Segmente an den Segmentenden bilden dabei Drehpunkte für die Streckung bzw. Entkrümmung.

Eine erste bevorzugte Ausführungsform des Hitzeschildes nach der Erfindung ist dadurch gekennzeichnet, dass die Zwischenräume jeweils einen äusseren Krümmungsradius und einen inneren Krümmungsradius aufweisen, dass die ersten Arme im kalten Zustand des Hitzeschildsegments jeweils einen äusseren Krümmungsradius und einen inneren Krümmungsradius aufweisen, und dass die beiden äusseren Krümmungsradien im wesentlichen gleich sind und der innere Krümmungsradius der ersten Arme kleiner ist, als der innere Krümmungsradius der Zwischenräume. Da bei dieser Ausführungsform das erforderliche Spiel im Mittelbereich der Segmente durch unterschiedliche Krümmungsradien erzeugt wird, lassen sich die Segmente einfach mit einer Schleifscheibe auf unterschiedlichen Krümmungsradien bearbeiten. Zugleich werden dadurch auch Absätze bzw. Unstetigkeiten im Randbereich der Segmente vermieden, an denen ungünstige mechanische Spannungszustände auftreten können.

Eine bevorzugte Weiterbildung dieser Ausführungsform zeichnet sich dadurch aus, dass der innere Krümmungsradius der ersten Arme so gewählt ist, dass er durch die thermisch bedingte Entkrümmung des Hitzeschildsegments bei Erwärmung auf die Betriebstemperatur der Gasturbine in einen Krümmungsradius übergeht, welcher ungefähr gleich dem inneren Krümmungsradius der Zwischenräume ist. Hierdurch wird vorteilhaft erreicht, dass im kalten Zustand das Segment mit der ganzen Aussenseite der ersten Arme an der Befestigung anliegt, während es im Betrieb, d.h. nach der thermisch bedingten Entkrümmung, mit der ganzen Innenseite an der Befestigung anliegt, so dass alle Kräfte zwischen dem Segment und der Befestigung immer grossflächig übertragen werden können.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im Längsschnitt, d.h. in einem Schnitt quer zur Turbinenachse, den Ausschnitt eines ringförmigen Hitzeschild-Trägers einer Gasturbine mit einem durch eine Klammer gebildeten gekrümmten Zwischenraum zur Lagerung eines Hitzeschildsegmentes nach der Erfindung;
- Fig. 2: den Schnitt durch die Anordnung nach Fig. 1 in der Ebene II - II;
- Fig. 3: im Längsschnitt den Randbereich eines Hitzeschildsegments gemäss einem bevorzugten Ausführungsbeispiel der Erfindung, welches zur Aufnahme in die Befestigungsvorrichtung nach Fig. 1 bzw. Fig. 2 vorgesehen ist.
- Fig. 4: einen Querschnitt durch das Hitzeschildsegment gemäss Fig. 3 in der Ebene IV - IV;
- Fig. 5: eine Schnittdarstellung der Befestigungsvorrichtung nach Fig. 1 mit eingesetztem Hitzeschildsegment gemäss Fig. 3 im kalten Zustand;
- Fig. 6: den Querschnitt durch die Anordnung nach Fig. 5 in der Ebene VII -VII;
- Fig. 7: den Querschnitt durch die Anordnung nach Fig. 5 in der Ebene VI -VI;
- Fig. 8: eine Schnittdarstellung der Befestigungsvorrichtung nach Fig. 1 mit eingesetztem Hitzeschildsegment gemäss Fig. 3 im betriebsmässigen, warmen Zustand; und
- Fig. 9: den Querschnitt durch die Anordnung nach Fig. 8 in der Ebene IX - IX.

### WEGE ZUR AUSFÜHRUNG DER ERFINDUNG

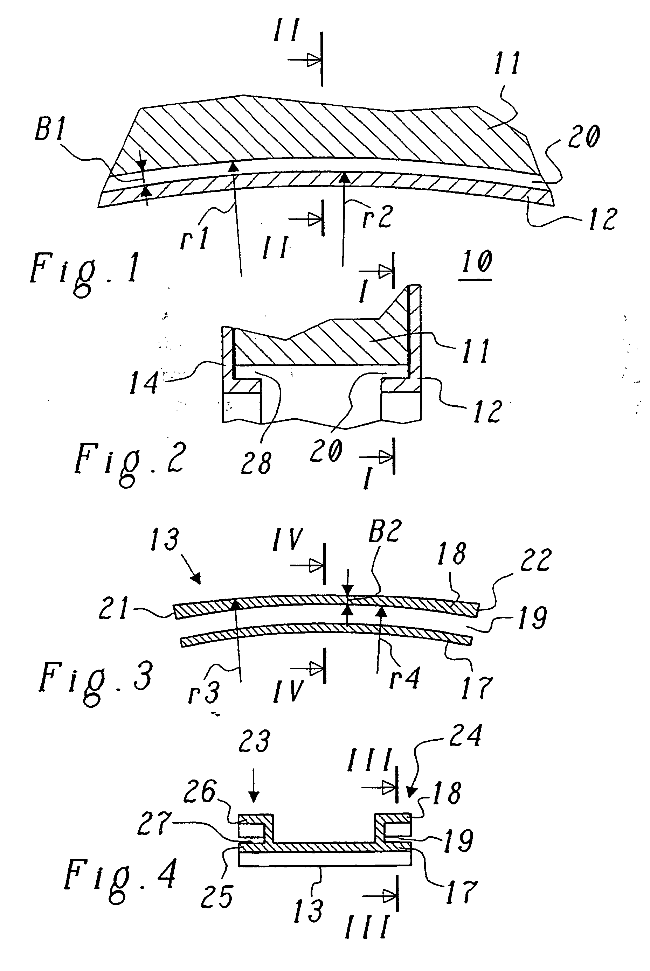

In den Fig. 1 und 2 ist im Längsschnitt, d.h. in einem Schnitt quer zur Turbinenachse (Schnittebene I -I in Fig. 2), und im Querschnitt (Schnittebene II - II in Fig. 1) der Ausschnitt eines ringförmigen Hitzeschild-Trägers 11 einer Gasturbine 10 mit durch seitlich angeordnete Klammern 12 und 14 gebildeten gekrümmten Zwischenräumen 20 und 28 zur Lagerung bzw. Halterung eines Hitzeschildsegmentes nach der Erfindung wiedergegeben. Der ringförmige Träger 11, der mit dem Gehäuse der Gasturbine 10 in Verbindung steht oder selbst Teil des Gehäuses sein kann, umgibt einen (nicht dargestellten) mit Laufschaufeln bestückten Teil des Rotors der Gasturbine 10, wie dies beispielsweise in Fig. 1 der US-A-5,071,313 gezeigt ist. Die beiden seitlich am Träger 11 angeordneten Klammern 12 und 14, die im vorliegenden Beispiel als separate Bauteile ausgebildet sind, aber ebensogut auch Bestandteil des Trägers 11 sein können, greifen mit L-förmig nach innen abgebogenen Enden von beiden Seiten unter den Träger 11. Die L-förmig abgebogenen Enden haben von der Innenseite des Trägers 11 einen Abstand und bilden so die ringförmig umlaufenden Zwischenräume 20 und 18, die eine konstante Breite B1 aufweisen und durch einen äusseren Radius r1 und einen inneren Radius r2 begrenzt sind (r1 = r2 + B1). Die Klammern 12 und 14 sind zur Montage der Hitzeschildsegmente demontierbar. Sie sind ebenfalls segmentiert, wobei ein Klammersegment für ein oder mehrere Hitzeschildsegment(e) vorgesehen sein kann.

In die Zwischenräume 20, 28 kann nun ein Hitzeschildsegment 13 eingesetzt werden, wie es in den Fig. 3 und 4 im Längsschnitt (Schnittebene III - III in Fig. 4) bzw. im Querschnitt (Schnittebene IV - IV in Fig. 3) dargestellt ist. Das Hitzeschildsegment 13 besteht im wesentlichen aus einer rechteckigen, in Längsrichtung gekrümmten Platte aus einem hitzefesten Material, an deren Längsseiten (ähnlich wie in Fig. 3 der US-A-5,071,313) Schienen 23, 24 zur Befestigung des Segments in der Trägerstruktur der Fig. 1 und 2 ausgebildet sind. Die gekrümmten Schienen 23, 24, die mit Einschnitten versehen sein können, weisen jeweils einen oberen Arm 18 bzw. 26 und einen unteren Arm 17 bzw. 25 auf, die sich parallel zueinander und zur Turbinenachse von den Längsseiten des Hitzeschildsegments 13 nach aussen erstrecken. Die oberen und unteren Arme 18, 17 bzw. 26, 25 sind jeweils voneinander beabstandet, so dass zwischen ihnen ein gekrümmter Schlitz 19 bzw. 27 frei bleibt, in welchen die Klammern 12, 14 mit ihren L-förmig abgebogenen Enden eingreifen können. Zur Bildung des (ringförmig geschlossenen) Hitzeschildes wird eine entsprechende Vielzahl von Hitzeschildsegmenten 13 in Umfangsrichtung hintereinander am Träger 11 befestigt.

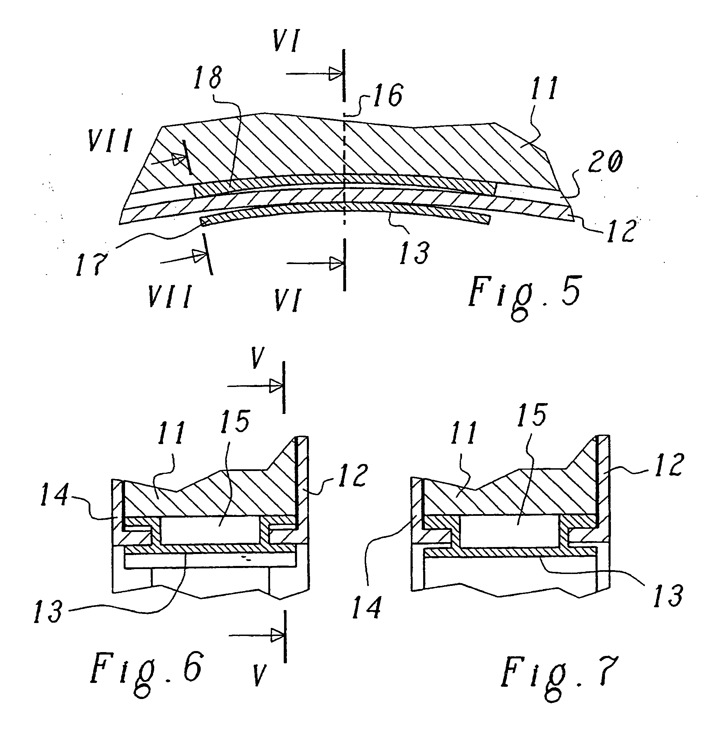

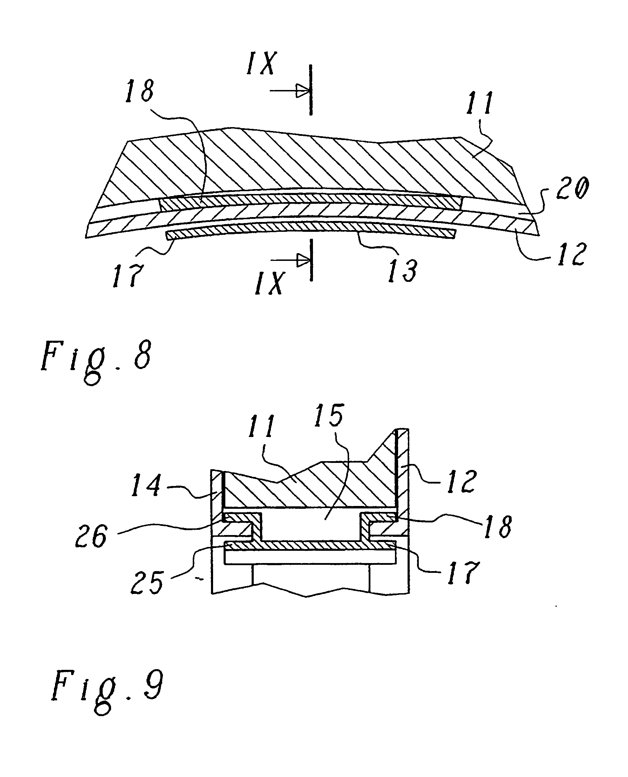

Die oberen Arme 18, 26 in den Schienen 23, 24 der Hitzeschildsegmente 13 erfahren nun im Rahmen der Erfindung eine besondere Ausgestaltung, die deutlich wird, wenn ein am Träger 11 befestigtes Hitzeschildsegment 13 betrachtet wird, wie dies in den Fig. 5 bis 7 wiedergegeben ist. Fig. 5 zeigt dabei den zu Fig. 1 und 3 vergleichbaren Längsschnitt durch die Anordnung (Schnittebene V - V in Fig. 6 bzw. Mittelebene 16 des Hitzeschildsegments 13), Fig. 6 den Querschnitt in der Schnittebene VI - VI gemäss Fig. 5 und Fig. 7 den Querschnitt in der Schnittebene VII - VII gemäss Fig. 5. Durch einen Vergleich der Breite B2 (Fig. 3) des oberen Armes 18 des Hitzeschildsegments 13 mit der (konstanten) Breite B1 des Zwischenraums 20 wird deutlich, dass die Breite B2 nicht konstant und in etwa gleich der Breite B1 des Zwischenraumes 20 ist, sondern dass die Breite B2 an den Stirnseiten 21, 22 (Fig. 3) des Hitzeschildsegmentes 13 am grössten ist, und zur Mittelebene 16 hin abnimmt und dort ihr Minimum aufweist. Dies wird vorzugsweise dadurch erreicht, dass der äussere Radius r3 (Fig. 3) des oberen Armes 18 (bzw. 26) in etwa gleich dem äusseren Radius r1 des Zwischenraumes 20 (bzw. 28) gewählt wird, und dass der innere Radius r4 (Fig. 3) des oberen Armes 18 deutlich kleiner gewählt wird als der innere Radius r2 des Zwischenraumes 20. Die äusseren Radien r1 und r3 sind dabei auf dasselbe Zentrum bezogen, während das Zentrum für den inneren Radius r4 gegenüber dem Zentrum für den inneren Radius r2 soweit radial nach aussen verschoben ist, dass die (maximale) Breite B2 der oberen Arme 18, 26 an den Stirnseiten 21, 22 des Hitzeschildsegments 13 in etwa gleich der Breite B1 der Zwischenräume 20, 28 ist. Damit wird erreicht, dass das Hitzeschildsegment 13 an den zwei (gegenüberliegenden) Stirnseiten 21, 22 praktisch spielfrei in den Zwischenräumen 20, 28 gehalten und gelagert wird, während zur Mitte hin ein zunehmendes Spiel vorhanden ist.

Die Darstellung der Fig. 5-7 bezieht sich auf den kalten Zustand der Gasturbine. Im warmen Betriebszustand wird die Innenseite der Hitzeschildsegmente 13 mit Heissgas beaufschlagt, während in den zwischen Hitzeschildsegment 13 und dem Träger 11 gebildeten Hohlraum 15 (Fig. 6 bzw. 7) zum Kühlen der Segmente Kühlluft einströmt und auf die Aussenseite der Segmente aufprallt. Durch diese thermische Beanspruchung "entkrümmen" bzw. strecken sich die Hitzeschildsegmente 13, wie dies in den zu Fig. 5 und 6 vergleichbaren Schnittdarstellungen 8 und 9 gezeigt ist. Die auf den Klammern 12 ,14 aufliegenden Kanten an den Stirnseiten 21, 22 der Hitzeschildsegmente 13 bilden dabei zwei Drehpunkte, während sich die Segmente im Mittelteil radial nach innen verschieben. Diese Streckung kann ungehindert soweit gehen, bis der Innenradius r4 der oberen Arme 18, 26 gleich dem inneren Radius r2 der Zwischenräume 20, 28 ist, wie dies in Fig. 8 dargestellt ist. Der innere Radius r4 im kalten Zustand kann nun vorzugsweise so gewählt werden, dass sich bei normalen Betriebstemperaturen der Gasturbine gerade die in Fig. 8 dargestellte Situation (r2 = r4) ergibt. Es werden dann durch die Befestigung keine zusätzlichen Kräfte auf das Hitzeschildsegment 13 ausgeübt. Es ist aber auch denkbar, den Radius r4 so zu wählen, dass die Situation aus Fig. 8 schon bei niedrigerer als der Betriebstemperatur erreicht wird. Dann treten zwar bei Betriebstemperatur zusätzliche Kräfte auf, weil das vorhandene Spiel bereits vorher erschöpft ist. Jedoch sind diese Kräfte wesentlich geringer als bei einer an sich spielfreien Lagerung. Entsprechend ist es aber auch denkbar, ein noch grösseres Spiel als nötig vorzusehen. Die unteren Arme 17, 25 des Hitzeschildsegmentes 13 können weitgehend unabhängig gestaltet werden, sofern sie nicht den beschriebenen Vorgang der Entkrümmung beeinträchtigen. Sie dienen im wesentlichen der Abschirmung der Klammern 12, 14 vor den Heissgasen.

Durch die Kombination von spielfreier Lagerung an den Stirnseiten und ausreichendem Spiel für die Streckung im Mittelbereich der Hitzeschildsegmente wird eine stabile, von thermomechanischer Belastung weitgehend freie Befestigung der Segmente ermöglicht. Weil das notwendige Spiel durch eine geeignete Wahl von Krümmungsradien (r3, r4) erzeugt wird, können die Segmente auf einfache Weise als Gussteile hergestellt werden, die dann mit einer Schleifscheibe auf den gewünschten Krümmungsradius geschliffen werden.

### BEZUGSZEICHENLISTE

- 10: Gasturbine
- 11: Träger (Gehäuse)
- 12,14: Klammer
- 13: Hitzeschildsegment
- 15: Hohlraum
- 16: Mittelebene
- 17,18: Arm
- 19: Schlitz
- 20,28: Zwischenraum (ringförmig)
- 21,22: Stirnseite (Hitzeschildsegment)
- 23,24: Schiene
- 25,26: Arm
- 27: Schlitz
- B1: Breite (Zwischenraum 20)
- B2: Breite (Arm 18 bzw. 26))
- r1,..,r4: Krümmungsradius

## Patentansprüche

1. Hitzeschild für eine Gasturbine (10), welches Hitzeschild insbesondere die rotierenden Schaufeln einer Stufe der Gasturbine (10) ringförmig umschliesst und aus einer Mehrzahl von in Umfangsrichtung hintereinander angeordneten, kreissegmentförmig gekrümmten und von aussen gekühlten Hitzeschildsegmenten (13) besteht, deren Längsseiten als in Umfangsrichtung verlaufende, entsprechend gekrümmte Schienen (23, 24) mit jeweils einem in axialer Richtung abstehenden ersten Arm (18 bzw. 26) ausgebildet sind, und die zur Befestigung am Gehäuse der Gasturbine (10) mit den ersten Armen (18, 26) jeweils in einem ringförmigen Zwischenraum (20, 28) konstanter Breite (B2) gelagert sind, **dadurch gekennzeichnet, dass** die ersten Arme (18, 26) eine in Umfangsrichtung variierende Breite (B2) aufweisen, welche an den Stirnseiten (21, 22) des Hitzeschildsegments (13) im wesentlichen gleich der Breite (B1) der Zwischenräume (20, 28) ist und zur Mittelebene (16) des Hitzeschildsegments (13) hin derart abnimmt, dass sich das Hitzeschildsegment (13) bei thermischer Belastung mit seinen ersten Armen (18, 26) in einem vorgegebenen Bereich in den Zwischenräumen (20, 28) ungehindert entkrümmen kann.

2. Hitzeschild nach Anspruch 1, **dadurch gekennzeichnet, dass** die Zwischenräume (20, 28) jeweils einen äusseren Krümmungsradius (r1) und einen inneren Krümmungsradius (r2) aufweisen, dass die ersten Arme (18, 26) im kalten Zustand des Hitzeschildsegments (13) jeweils einen äusseren Krümmungsradius (r3) und einen inneren Krümmungsradius (r4) aufweisen, und dass die beiden äusseren Krümmungsradien (r1, r3) im wesentlichen gleich sind und der innere Krümmungsradius (r4) der ersten Arme (18, 26) kleiner ist, als der innere Krümmungsradius (r2) der Zwischenräume (20, 28).

3. Hitzeschild nach Anspruch 2, **dadurch gekennzeichnet, dass** der innere Krümmungsradius (r4) der ersten Arme (18, 26) so gewählt ist, dass er durch die thermisch bedingte Entkrümmung des Hitzeschildsegments (13) bei Erwärmung auf die Betriebstemperatur der Gasturbine (10) in einen Krümmungsradius übergeht, welcher ungefähr gleich dem inneren Krümmungsradius (r2) der Zwischenräume (20, 28) ist.

4. Hitzeschild nach einem der Ansprüche 1 bis 3, **dadurch gekennzeichnet, dass** die Zwischenräume (20, 28) jeweils zwischen einem ringförmigen Träger (11) für die Hitzeschildsegmente (13) und zwei Klammern (12, 14) gebildet werden, welche auf beiden Seiten des Trägers (11) angeordnet sind und mit L-förmig nach innen abgebogenen Enden von beiden Seiten unter den Träger (11) greifen.

5. Hitzeschild nach Anspruch 4, **dadurch gekennzeichnet, dass** an den Schienen (23, 24) der Hitzeschildsegmente (13) unterhalb des ersten Armes 18 bzw. 26) jeweils ein davon beabstandeter, parallel verlaufender zweiter Arm (17 bzw. 25) vorgesehen ist, so dass zwischen den parallelen ersten und zweiten Armen (17, 18 bzw. 25, 26) Schlitze (19 bzw. 27) gebildet werden, und dass die Klammern (12, 14) mit den L-fömig abgebogenen Enden in die Schlitze (19, 27) eingreifen.

## Claims

1. Heat shield for a gas turbine (10), which heat shield encloses in particular the rotating blades of a stage of the gas turbine (10) in an annular manner and consists of a plurality of heat-shield segments (13), which are arranged one behind the other in the circumferential direction, are curved in a circular-segment shape and are cooled from outside, and the longitudinal sides of which are designed as correspondingly curved rails (23, 24) running in the circumferential direction and having in each case a first arm (18 or 26 resp.) projecting in the axial direction, and which, for fastening to the casing of the gas turbine (10), are mounted with the first arms (18, 26) in each case in an annular intermediate space (20, 28) of constant width (B2), **characterized in that** the first arms (18, 26) have a width (B2) which varies in the circumferential direction, and is essentially equal to the width (B1) of the intermediate spaces (20, 28) at the end faces (21, 22) of the heat-shield segment (13) and decreases towards the centre plane (16) of the heat-shield segment (13) in such a way that the heat-shield segment (13), during thermal loading, can straighten unhindered with its first arms (18, 26) in a predetermined region in the intermediate spaces (20, 28).

2. Heat shield according to Claim 1, **characterized in that** the intermediate spaces (20, 28) in each case have an outer radius of curvature (r1) and an inner radius of curvature (r2), **in that** the first arms (18, 26), in the cold state of the heat-shield segment (13), in each case have an outer radius of curvature (r3) and an inner radius of curvature (r4), and **in that** the two outer radii of curvature (r1, r3) are essentially equal and the inner radius of curvature (r4) of the first arms (18, 26) is smaller than the inner radius of curvature (r2) of the intermediate spaces (20, 28).

3. Heat shield according to Claim 2, **characterized in that** the inner radius of curvature (r4) of the first arms (18, 26) is selected in such a way that, due to the thermally induced straightening of the heat-shield segment (13) during heating to the operating temperature of the gas turbine (10), it changes into a radius of curvature which is approximately equal to the inner radius of curvature (r2) of the intermediate spaces (20, 28).

4. Heat shield according to one of Claims 1 to 3, **characterized in that** the intermediate spaces (20, 28) are in each case formed between an annular carrier (11) for the heat-shield segments (13) and two clamps (12, 14), which are arranged on both sides of the carrier (11) and engage under the carrier (11) from both sides with ends bent inwards in an L-shape.

5. Heat shield according to Claim 4, **characterized in that** a second arm (17 or 25 resp.) at a distance from the first arm (18 or 26 resp.) and running in parallel is provided on the rails (23, 24) of the heat-shield segments (13) below the first arm (18 or 26 resp.), so that slots (19 and 27 resp.) are formed between the parallel first and second arms (17, 18 and 25, 26 resp.), and **in that** the clamps (12, 14) engage in the slots (19, 27) with the ends bent in an L-shape.

## Revendications

1. Bouclier thermique pour une turbine à gaz (10), lequel bouclier thermique entoure en particulier les aubes rotatives d'un étage de la turbine à gaz (10) de manière annulaire, et se compose d'une pluralité de segments de bouclier thermique (13) disposés les uns derrière les autres dans la direction périphérique, courbés en forme de segments de cercle et refroidis de l'extérieur, dont les longs côtés sont réalisés sous forme de rails (23, 24) de courbure correspondante, s'étendant dans la direction périphérique avec à chaque fois un premier bras (18 resp. 26) saillant dans la direction axiale, et sont montés en vue de la fixation sur le carter de la turbine à gaz (10) aux premiers bras (18, 26) à chaque fois dans un espace intermédiaire de forme annulaire (20, 28) de largeur constante (B1), **caractérisé en ce que** les premiers bras (18, 26) présentent une largeur (B2) variant dans la direction périphérique, qui, au niveau des côtés frontaux (21, 22) du segment (13) de bouclier thermique est essentiellement égale à la largeur (B1) des espaces intermédiaires (20, 28) et diminue vers le plan médian (16) du segment (13) de bouclier thermique de telle sorte que le segment (13) de bouclier thermique, en cas de sollicitation thermique, puisse se redresser sans obstacle avec ses premiers bras (18, 26) dans une région prédéterminée dans les espaces intermédiaires (20, 28).

2. Bouclier thermique selon la revendication 1, **caractérisé en ce que** les espaces intermédiaires (20, 28) présentent chacun un rayon de courbure extérieur (r1) et un rayon de courbure intérieur (r2), **en ce que** les premiers bras (18, 26), dans l'état froid du segment (13) de bouclier thermique présentent chacun un rayon de courbure extérieur (r3) et un rayon de courbure intérieur (r4) et **en ce que** les deux rayons de courbure extérieurs (r1, r3) sont essentiellement égaux et le rayon de courbure intérieur (r4) des premiers bras (18, 26) est plus petit que le rayon de courbure intérieur (r2) des espaces intermédiaires (20, 28).

3. Bouclier thermique selon la revendication 2, **caractérisé en ce que** le rayon de courbure intérieur (r4) des premiers bras (18, 26) est choisi de telle sorte que sous l'effet du redressement du segment (13) de bouclier thermique provoqué thermiquement par le réchauffement à la température de fonctionnement de la turbine à gaz (10), il se transforme en un rayon de courbure qui est approximativement égal au rayon de courbure intérieur (r2) des espaces intermédiaires (20, 28).

4. Bouclier thermique selon l'une quelconque des revendications 1 à 3, **caractérisé en ce que** les espaces intermédiaires (20, 28) sont à chaque fois formés entre un support annulaire (11) pour les segments (13) de bouclier thermique et deux pinces (12, 14) qui sont disposées des deux côtés du support (11) et qui viennent en prise, des deux côtés, sous le support (11) par les extrémités recourbées vers l'intérieur en forme de L.

5. Bouclier thermique selon la revendication 4, **caractérisé en ce qu'**un deuxième bras (17, resp. 25) est à chaque fois prévu sur les rails (23, 24) des segments (13) de bouclier thermique en dessous du premier bras (18, resp. 26), à une certaine distance de celui-ci et parallèlement à celui-ci, de sorte qu'entre les premiers et deuxièmes bras parallèles (17,18, resp. 25, 26), des fentes (19 resp. 27) soient formées et que les pinces (12, 14) viennent en prise dans les fentes (19, 27) avec les extrémités recourbées en forme de L.
